# EUROPÄISCHE PATENTSCHRIFT

(11) **EP 2 087 410 B1**
(45) Veröffentlichungstag und Bekanntmachung des Hinweises auf die Patenterteilung: **30.01.2013**
(21) Anmeldenummer: 07819179.8
(22) Anmeldetag: 20.10.2007
(51) Int. Cl.: G05G 1/10, G05G 5/03, G05G 5/06

(54) **DREHSTELLER MIT MAGNETISCH ERZEUGTER HAPTIK**
ROTARY ACTUATOR WITH A MAGNETICALLY PRODUCED TACTILE SENSE
ACTIONNEUR ROTATIF A HAPTIQUE MAGNETIQUEMENT PRODUITE

(30) Priorität: 31.10.2006 DE 102006051869; 16.01.2007 DE 102007002189
(43) Veröffentlichungstag der Anmeldung: 12.08.2009
(73) Patentinhaber: PREH GmbH, 97616 Bad Neustadt (DE)
(72) Erfinder: KRAMLICH, Andreas, 97424 Schweinfurt (DE); WETH, Dieter, 97616 Band Neustadt a.d. Saale (DE)
(74) Vertreter: Kayser, Martin
(86) Internationale Anmeldenummer: PCT/EP2007/009114
(87) Internationale Veröffentlichungsnummer: WO 2008/052676

(56) Entgegenhaltungen:
- DE-A1- 19 712 049
- DE-U- 7 021 087
- DE-U1- 9 003 955
- FR-A- 2 370 350
- US-A1- 2004 094 393

## Beschreibung

Die vorliegende Erfindung betrifft einen Drehsteller mit magnetisch erzeugter Haptik, insbesondere für ein Kraftfahrzeug.

Bedienelemente mit einer drehbaren Handhabe, so genannte Drehsteller, sind weit verbreitet, insbesondere zur Steuerung des Bordcomputers oder einer sonstigen Funktion eines Kraftfahrzeugs. Dabei ist es wünschenswert, eine Veränderung der Drehposition der Handhabe haptisch an den Benutzer zurückzumelden, beispielsweise in Form von Drehrasten.

Beispielsweise hat sich in der Vergangenheit gezeigt, dass die Nutzung von Magneten für die Erzeugung einer magnetisch erzeugten Haptik vorteilhaft sein können. Die Druckschriften US 2004/0094393 A1, DE 197 12 049 A1 sowie DE 70 21 087 U sind hier nur beispielhaft genannt. In diesen werden beispielsweise Drehsteller oder Verschiebeschalter beschrieben, bei denen sich abstoßende oder anziehende Permanentmagneten einander gegenüber liegen und somit eine spürbare Haptik erzeugen. Nachteilig bei diesen Drehstellern oder Schaltern ist zum einen die aufwendige Konstruktion, zum anderen die eingeschränkte Funktionalität.

Es ist die Aufgabe der vorliegenden Erfindung, einen Drehsteller mit haptischer Rückmeldung bereitzustellen, der einfach und verschleißarm aufgebaut ist und möglichst viele Funktionen.

Gelöst wird diese Aufgabe durch einen Drehsteller gemäß Patentanspruch 1. Vorteilhafte Ausgestaltungsformen sind den abhängigen Patentansprüchen zu entnehmen.

Ein Drehsteller mit magnetisch erzeugter Haptik nach Patentanspruch 1 weist zwei plan-parallele Permanentmagnete auf, wobei der erste Magnet ortsfest in einem Gehäuse des Drehstellers angeordnet ist und der zweite Magnet mittels einer Handhabe des Drehstellers gegenüber dem ersten Magneten verdrehbar ist.

Die Magnetkraft zwischen den beiden Permanentmagneten führt dazu, dass sie sich bei unbetätigter Handhabe in einer stabilen Gleichgewichtslage zueinander befinden. Wird der zweite Magnet mittels der Handhabe verdreht, bewirkt die Kraft zwischen den Magneten eine Rückstellkraft auf die Handhabe. Ab einer gewissen Verdrehung der Magnete zueinander, üblicherweise 90°, ist die Rückstellkraft in die vorgenannte stabile Lage überwunden und die Kraft zwischen den Magneten wirkt derart, dass sie die Magnete in eine zweite stabile Gleichgewichtslage bringt. Der so erzeugte Kraftverlauf über dem Drehwinkel gibt eine haptische Rückmeldung an den Benutzer des Drehstellers.

In vorteilhafter Weise bestehen die Permanentmagnete aus zwei Schichten unterschiedlicher magnetischer Polung, wobei die Dicke der Schichten kleiner ist als die Seitenlängen der Grundfläche der Schichten.

Bevorzugt ist stets genau ein Pol eines jeden Magneten ständig dem anderen Magneten zugewandt. Die Verdrehung des zweiten Magneten erfolgt dementsprechend um eine Achse, die senkrecht auf den Grundflächen der Magnete steht. Die Permanentmagnete bleiben da her auch bei einer Drehung des zweiten Magneten stets planparallel.

Erfindungsgemäß befindet sich ein konstanter Luftspalt zwischen den Permanentmagneten. Die einander zugewandten, planparallelen Oberflächen der beiden Magnete weisen demnach stets den gleichen Abstand auf. Über die Wahl dieses Abstands ist der Kraftverlauf über dem Drehwinkel der Handhabe einstellbar.

In einer Ausgestaltungsform der Erfindung ist der zweite Magnet drehfest mit der Handhabe des Drehstellers verbunden. Der Drehwinkel der Handhabe entspricht somit dem Verdrehwinkel zwischen den beiden Permanentmagneten. Eine vollständige Drehung der Handhabe um 360° führt zu zwei stabilen Gleichgewichtslagen der Magnete zueinander und somit zu zwei Rastpunkten.

In einer nicht erfindungsgemäßen Ausgestaltungsform ist der zweite Magnet über ein Getriebe mit der Handhabe des Drehstellers verbunden. Über das Getriebe ist das Verhältnis des Drehwinkels der Handhabe zum Verdrehwinkel zwischen den beiden Permanentmagneten einstellbar. Mittels des Übersetzungsverhältnisses des Getriebes ist die Anzahl der Rasten bei einer vollständigen Umdrehung der Handhabe festlegbar.

Die vorliegende Erfindung soll anhand dreier Ausführungsbeispiele näher erläutert werden. Dabei zeigen
- Figur 1: einen Drehsteller mit auf der Drehwelle montierten Permanentmagnet, nach dem Stand der Technik,
- Figur 2: einen weiteren Drehsteller mit auf der Drehwelle montierten Permanentmagneten,
- Figur 3: einen Drehsteller mit Getriebe zwischen Drehwelle und verdrehbarem Magneten.

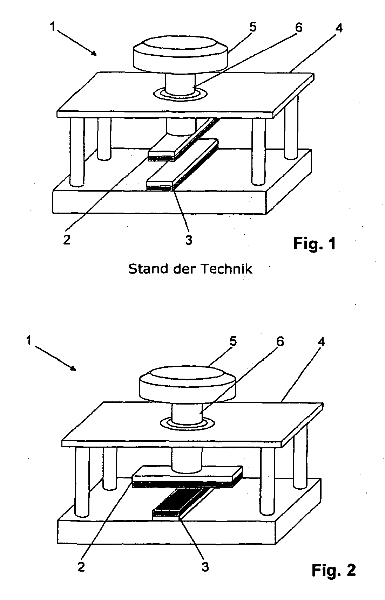

Figur 1 zeigt einen Drehsteller 1 mit einem Gehäuse 4. Ortsfest im Gehäuse 4 ist ein erster Permanentmagnet 3 angeordnet. Ein zweiter Permanentmagnet 2 ist drehfest mit einer Drehwelle 6 verbunden. Ebenfalls drehfest mit der Drehwelle 6 verbunden ist die Handhabe 5. Die Nordpole der Magnete 2 und 3 sind grau eingefärbt, die Südpole weiß dargestellt. Die Magnetpole sind jeweils flächig ausgebildet.

In der in der Figur 1 dargestellten stabilen Gleichgewichtslage sind die Magnete 2 und 3 gleich ausgerichtet. Der Nordpol des Magneten 2 steht dem Südpol des Magneten 3 gegen über. Wird der Magnet 2 mittels der Handhabe 5 aus dieser Position herausgedreht, so bewirkt die Kraft zwischen den Magneten 2 und 3 eine Rückstellkraft in die in Figur 1 dargestellte Position des Magneten 2 und damit der Handhabe 5. Ist der Magnet 2 um 90° gegenüber Magnet 3 verdreht, so ist die Rückstellkraft überwunden und der Magnet 2 strebt in eine zweite stabile Gleichgewichtslage, in der er gegenüber der Lage in Figur 1 um 180° gedreht ist. Bis zu einem Verdrehwinkel von 90° muss demnach eine Kraft überwunden werden, ab einem Drehwinkel von 90° wird der Magnet 2 und damit die Handhabe 5 durch die Magnetkraft in eine zweite stabile Gleichgewichtslage überführt. Dieser Kraftverlauf ist für den Bediener des Drehstellers 1 als haptische Rückmeldung in Form einer Rast fühlbar.

Figur 2 zeigt einen erfindungsgemäßen Drehsteller, der sich vom Drehsteller in Figur 1 darin unterscheidet, dass gleiche Pole der Magneten 2 und 3 einander zugewandt sind, im vorliegenden Beispiel Nordpole. Aufgrund des gleichen Aufbaus der Drehsteller sind gleiche Elemente mit gleichen Bezugszeichen wie in Figur 1 versehen.

Dadurch, das sich zwei gleiche Pole der Permanentmagnete 2 und 3 gegenüberstehen, befindet sich der Magnet 2 und damit die Handhabe 5 dann in einer stabilen Lage, wenn die Magnete 2 und 3, wie in Figur 2 dargestellt, in einem rechten Winkel zueinander ausgerichtet sind. Die sonstige Funktionsweise entspricht der des Drehstellers aus Figur 1. Zusätzlich ergibt die Ausführungsform nach Figur 2 eine Push-Funktionalität. Wird die Handhabe 5 in Richtung der Drehwelle 6 gedrückt, so bewegen sich die Magnete 2 und 3 aufeinander zu und der Luftspalt zwischen ihnen wird kleiner. Aufgrund der Abstoßung gleichartiger Magnetpole wird der Druckkraft eine magnetisch erzeugte Gegenkraft entgegengesetzt.

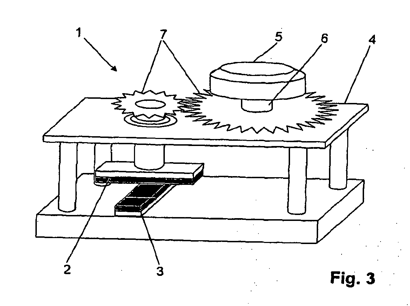

Figur 3 zeigt einen weiteren Drehsteller der nicht zur Erfindung gehört, bei dem der Permanentmagnet 2 nicht unmittelbar drehfest mit der Drehwelle 6 der Handhabe 5 verbunden ist, sondern über ein Getriebe 7. Das Getriebe 7 erzeugt eine mechanische Übersetzung mit dem Faktor 1:2. Das heißt, dass bei einer Drehung der Handhabe 5 um einen gewissen Drehwinkel sich der Magnet 2 um das Doppelte dieses Drehwinkels gegenüber dem Magneten 3 verdreht. Dies führt dazu, dass bei einer vollen Umdrehung der Handhabe 5 nicht wie in den Drehstellern nach Figuren 1 und 2 zwei Rasten durchlaufen werden, sondern vier. Durch die Wahl des Übersetzungsverhältnisses des Getriebes 7 ist jede beliebige Anzahl Rasten pro voller Umdrehung der Handhabe 5 erzeugbar.

Die Rückstellkraft der Magnete 2 und 3 in die stabilen Glelchgewichtslagen wird über das Getriebe 7 auf die Handhabe 5 übertragen und ist vom Bediener des Drehstellers 1 wahrnehmbar. Da sich aus dem Drehsteller 1 aus Figur 3 gleiche Pole der Magnete 2 und 3 gegenüberstehen, befinden sich die Magnete in einer stabilen Gleichgewichtslage zueinander, wenn sie wie in Figur 3 2 dargestellt senkrecht zu einander ausgerichtet sind.

## Patentansprüche

1. Drehsteller (1) mit magnetisch erzeugter Haptik, insbesondere für ein Kraftfahrzeug, aufweisend zwei planparallele Permanentmagnete (2, 3), wobei der erste Magnet (3) ortsfest in einem Gehäuse (4) des Drehstellers
(1) angeordnet ist und die Permanentmagnete (2, 3) derart angeordnet sind, dass zwei gleiche Pole der Magneten (2, 3) einander zugewandt sind, wobei die Permanentmagnete (2, 3) aus zwei Schichten unterschiedlicher magnetischer Polung bestehen, wobei die Dicke der Schichten kleiner ist als die Seitenlänge der Grundfläche der Schichten und der zweite Magnet
(2) mittels einer Handhabe (5) des Drehstellers (1) gegenüber dem ersten Magneten (3) verdrehbar ist, **dadurch gekennzeichnet, dass** sich zwischen den Permanentmagneten (2, 3) ein Luftspalt befindet und der Drehsteller eine Push-Funktionalität aufweist, wobei die Handhabe (5) in Richtung einer Drehwelle (6) gedrückt wird und sich die Permanentmagnete (2, 3) aufeinander zu bewegen und der Luftspalt zwischen den Magneten (2, 3) kleiner wird.

2. Drehsteller (1) nach Anspruch 1, **dadurch gekennzeichnet, dass** der zweite Magnet (2) drehfest mit der Handhabe (5) des Drehstellers (1) verbunden ist.

## Claims

1. Rotary actuator (1) with magnetically generated haptics, in particular for a motor vehicle, comprising two plane-parallel permanent magnets (2, 3), the first magnet (3) being stationarily disposed in a housing (4) of the rotary actuator (1) and the permanent magnets (2, 3) being disposed in such a way that two like poles of the magnets (2, 3) face each other, the permanent magnets (2, 3) consisting of two layers of different magnetic polarity, the thickness of the layers being smaller than the side length of the base area of the layers, and the second magnet (2) being rotatable relative to the first magnet (3) by means of a handle (5) of the rotary actuator (1), **characterised in that** an air gap is located between the permanent magnets, (2, 3) and the rotary actuator has a push functionality, wherein the handle (5) is pushed in the direction of a rotating shaft (6) and the permanent magnets (2, 3) move towards each other and the air gap between the magnets (2, 3) becomes smaller.

2. Rotary actuator (1) according to claim 1, **characterised in that** the second magnet (2) is non-rotatably connected to the handle (5) of the rotary actuator (1).

## Revendications

1. Actionneur rotatif (1) ayant une haptique produite de façon magnétique, en particulier pour un véhicule automobile, comprenant deux aimants permanents (2, 3) à faces planes et parallèles, le premier aimant (3) étant disposé de façon stationnaire à l'intérieur d'un boîtier (4) de l'actionneur rotatif (1) et lesdits aimants permanents (2, 3) étant agencés de manière à ce que deux mêmes pôles des aimants (2, 3) soient tournés l'un vers l'autre, lesdits aimants permanents (2, 3) étant composés de deux couches de polarisation magnétique différente, l'épaisseur des couches étant inférieure à la longueur de côté de la surface de base des couches et ledit deuxième aimant (2) étant apte à être tourné par rapport audit premier aimant (3) au moyen d'une manette (5) de l'actionneur rotatif (1), **caractérisé par le fait qu'**un entrefer est situé entre lesdits aimants permanents (2, 3) et ledit actionneur rotatif présente une fonctionnalité push, ladite manette (5) étant poussée en direction d'un arbre rotatif (6) et les aimants permanents (2, 3) se déplaçant l'un vers l'autre et l'entrefer situé entre les aimants (2, 3) devenant plus petit.

2. Actionneur rotatif (1) selon la revendication 1, **caractérisé par le fait que** ledit deuxième aimant (2) est solidaire en rotation de ladite manette (5) de l'actionneur rotatif (1).
